# EUROPÄISCHE PATENTSCHRIFT

(11) **EP 1 170 621 B1**
(45) Veröffentlichungstag und Bekanntmachung des Hinweises auf die Patenterteilung: **17.03.2004**
(21) Anmeldenummer: 01116402.7
(22) Anmeldetag: 06.07.2001
(51) Int. Cl.: G02F 1/01, G02F 1/313

(54) **Integrierte optische Wellenleiteranordnung**
Integrated optical waveguide device
Dispositif de guide d'onde optique intégré

(30) Priorität: 06.07.2000 DE 10032933
(43) Veröffentlichungstag der Anmeldung: 09.01.2002
(73) Patentinhaber: Infineon Technologies AG, 81669 München (DE)
(72) Erfinder: Dieckröger, Jens, 81671 München (DE)
(74) Vertreter: Reinhard - Skuhra - Weise & Partner

(56) Entgegenhaltungen:
- EP-A- 0 980 018
- EP-A- 0 992 834
- EP-A- 0 994 370
- EP-A- 0 997 765
- EP-A- 1 018 665
- WO-A-00/28355
- WO-A-01/55780
- US-A- 6 002 823
- PATENT ABSTRACTS OF JAPAN vol. 1999, no. 13, 30. November 1999 (1999-11-30) -& JP 11 237652 A (HITACHI CABLE LTD), 31. August 1999 (1999-08-31)

## Beschreibung

Die vorliegende Erfindung betrifft eine integrierte Wellenleiteranordnung gemäß dem Oberbegriff des Anspruchs 1, wie aus der EP-A-0 980 018 bekannt.

Die EP-A-0 997 765 offenbart eine integrierte Wellenleiteranordnung mit einem Wellenleiter, bestehend aus einem Glaskern und einem Mantel, einem Fremdbereich aus Polymer und mit einer Temperatureinstelleinheit, wobei der Fremdbereich in dem Mantel integriert ist.

Die WO 00/28355 offenbart eine integrierte Wellenleiteranordnung mit einem aus Glas bestehenden Wellenleiterbereich, in dem ein Wellenleiter mit Glaskern und Glasmantel angeordnet ist, einem sich in der Nähe des Wellenleiters erstreckenden Fremdbereich aus einem von Glas verschiedenen Material und mit einer Temperatureinstelleinheit zum Erwärmen und Abkühlen des Fremdbereichs, wodurch die Wellenausbreitung im Wellenleiter beeinflußbar ist, wobei der Fremdbereich in dem Wellenleiterbereich integriert ist.

Die JP(A) 11237652 offenbart eine integrierte Wellenleiteranordnung mit einem Wellenleiter bestehend aus Glaskern und Glasmantel und einem Fremdbereich aus Polymer und mit einer Temperatureinstelleinheit, wobei der Fremdbereich in dem Glasmantel integriert ist.

Die EP-A-0 992 834 offenbart eine integrierte Wellenleiteranordnung mit einem Wellenleiter bestehend aus Glaskern und Glasmantel, einem Fremdbereich aus Polymer und einer Temperatureinstelleinheit, wobei der Fremdbereich in dem Glasmantel integriert ist.

Die der vorliegenden Erfindung zugrunde liegende Problematik wird erläutert an einer integrierten Wellenleiteranordnung, die einen Wellenleiterbereich, einen Fremdbereich und eine Temperatureinstelleinheit enthält. Der Wellenleiterbereich besteht aus Glas, zum Beispiel aus SiO₂, und enthält einen Wellenleiter mit Glaskern und Glasmantel. Die Brechzahl des Glaskerns ist größer als die Brechzahl des Glasmantels. Der Wellenleiter ist so berechnet, dass er eine elektromagnetische Welle verlustarm führt.

Der Fremdbereich besteht aus einem von Glas verschiedenen Material und erstreckt sich in der Nähe des Wellenleiters. Ein typischer Abstand zwischen Fremdbereich und Wellenleiter beträgt beispielsweise 1 Mikrometer (µm) oder 2 µm.

Die Temperatureinstelleinheit dient zum Erwärmen und/oder Abkühlen des Fremdbereichs, wodurch die Wellenausbreitung im Wellenleiter beeinflussbar ist. Ein typischer Arbeitsbereich der Temperatureinstelleinheit liegt zwischen -40°C und 150°C

Eine solche Wellenleiteranordnung ist aus dem Artikel "Hybrid switches offer the best of both worlds", fiber systems, 05/2000, Vol.4, No.4, p.15, von Pauline Rigby, bekannt. Die dort erläuterte Wellenanordnung enthält zwei Wellenleiter aus Glas, die durch einen Wellenleiter aus Polymer verbunden sind.

Beim Herstellen von Wellenleitern aus Glas wird üblicherweise wie folgt vorgegangen:
1. Auf ein Siliziumsubstrat wird eine Zwischenschicht aus Siliziumdioxid aufgebracht, die auch als Buffer-Schicht bezeichnet wird.
2. Auf die Siliziumdioxidschicht wird eine Kernschicht aufgebracht, deren Brechungsindex größer als der Brechungsindex der Siliziumdioxidschicht ist. Die Kernschicht besteht ebenfalls aus Siliziumdioxid.
3. Aus der Kernschicht werden Bereiche entfernt, an denen keine Wellenleiterkerne verlaufen sollen, üblicherweise durch trocken-chemisches Ätzen.
4. Die verbleibenden Wellenleiterkerne der Kernschicht und die im vorherigen Verfahrensschritt freigelegten Flächen der Zwischenschicht werden mit einer Mantelschicht aus Siliziumdioxid beschichtet, die dieselbe Brechzahl wie das Siliziumdioxid der Zwischenschicht hat. Dieser Prozess wird auch als cladding bezeichnet.
   Die bekannte integrierte Wellenleiteranordnung ist hybrid in dem Sinne, dass sie einen Wellenleiter aus Glas und einen Wellenleiter aus Polymer enthält. Wellenleiter aus Glas zeichnen sich durch geringe Übertragungsverluste beim Führen der Wellen aus. Wellenleiter aus Polymer haben dagegen einen wesentlich höheren thermooptischen Koeffizienten als Wellenleiter als Glas und sind deshalb für Schaltvorgänge mit Hilfe der Temperatureinstelleinheit besser geeignet. Der thermooptische Koeffizient ist ein Maß für die Änderung der Brechzahl abhängig von der Änderung der Temperatur eines Werkstoffes. Für SiO₂ beträgt der thermooptische Koeffizient etwa dn/dT=1e-6/K. Der hybride Ansatz nutzt durch den Einsatz beider Werkstoffe beide Vorteile aus. Es entsteht ein Schaltelement, das mit geringer Schaltleistung und geringen Übertragungsverlusten arbeitet.
   Es ist Aufgabe der Erfindung, eine einfach aufgebaute integrierte Wellenleiteranordnung anzugeben, bei der die Vorteile der hybriden Bauweise erhalten bleiben.
   Die die Wellenleiteranordnung betreffende Aufgabe wird durch eine Wellenleiteranordnung mit den Merkmalen des Patentanspruchs 1 gelöst. Weiterbildungen sind in den Unteransprüchen angegeben.
   Die Erfindung geht von der Erkenntnis aus, dass die guten Eigenschaften eines Polymerwellenleiters bezüglich des großen Temperaturkoeffizientens auch dann erhalten bleiben, wenn nur der Wellenleiterkern aus Polymer besteht. Der Wellenleitermantel lässt sich aus Glas fertigen, ohne dass die Übertragungseigenschaften wesentlich geändert werden. Weiterhin geht die Erkenntnis von der Überlegung aus, dass andere Werkstoffe als Glas, zum Beispiel Polymer, ein besseres Wärmeleitvermögen haben. Beim Verwenden eines Wellenleiterkerns aus einem anderen Material als Glas in einem aus Glas bestehenden Bereich lässt sich die durch die Temperatureinstelleinheit abgegebene Energie auf einen kleineren Bereich konzentrieren, da über den Wellenleitermantel weniger Wärme abgeleitet wird.
   Bei der erfindungsgemäßen Wellenleiteranordnung gemäss Anspruch 1 ist zusätzlich zu den eingangs genannten Merkmalen der Fremdbereich in den Wellenleiterbereich integriert bzw. eingebettet. Der Fremdbereich bildet den Bereich, in dem mit Hilfe der Temperatureinstelleinheit Schaltvorgänge ablaufen. Bei der erfindungsgemäßen Wellenleiteranordnung sind Wellenleiter außerhalb des Fremdbereichs aus Glas und haben somit geringe Übertragungsverluste. Der Fremdbereich selbst besteht aus einem Material, das sich von Glas unterscheidet und deshalb eine höhere Wärmeleitfähigkeit und einen größeren thermooptischen Koeffizienten hat.
   Durch das Integrieren des Fremdbereichs in den Wellenleiterbereich wird die Herstellung der Wellenleiteranordnung vereinfacht. Zusätzlich zu den eingangs genannten Verfahrensschritten werden die folgenden Schritte ausgeführt:
5. In die Mantelschicht wird ein Graben geätzt.
6. Die gesamte Struktur wird mit einem Polymer überschichtet, zum Beispiel mittels Lackschleudern auch spinning genannt.

Somit muss beim Herstellen der erfindungsgemäßen Wellenleiteranordnung nur eine Polymerschicht aufgebracht werden. Die Fertigungstoleranzen sind klein, weil ein Graben bestimmter Tiefe sehr genau geätzt werden kann.

Bei der erfindungsgemäßen Wellenleiteranordnung werden die Vorteile des hybriden Ansatzes beibehalten. Zusätzlich wird jedoch erreicht, dass sich die von der Temperatureinstelleinheit abgegebene Wärme auf den Wellenleiterkern aus Polymer konzentriert, weil ein Glasmantel verwendet wird. Auch bei Abkühlungen wird Wärme zunächst nur aus dem Fremdbereich entzogen. Dies führt zu einer Verringerung der erforderlichen Schaltleistung.

Die Brechzahl des Materials im Fremdbereich ist unkritisch, da sie auf Grund des großen thermooptischen Koeffizienten mit Hilfe der Temperatureinstelleinheit in weiten Grenzen eingestellt werden kann.

Die erfindungsgemäße integrierte Wellenleiteranordnung eröffnet den Weg für eine Vielzahl neuartiger Wellenleiterbauelemente. Abhängig von der Anordnung des Fremdbereiches bezüglich eines Glaswellenleiters oder bezüglich mehrerer Glaswellenleiter lassen sich unter anderem Schalteinheiten, Koppeleinheiten, Abschwächer und Abstrahler bauen.

Bei der erfindungsgemäßen Wellenleiteranordnung ist der Wellenleiterbereich auf einem ebenen Substrat angeordnet. Auf der vom Substrat abgewandten Seite bildet der Wellenleiterbereich eine etwa parallel zur Grenzfläche von Substrat und Wellenleiterbereich liegende Fläche. Die Wellenleiteranordnung lässt sich unter Verwendung der technisch sehr weit entwickelten lithografischen Verfahren herstellen. Der Wellenleiterbereich enthält bei Anwendung der eingangs genannten Verfahrensschritte 1 bis 4 somit die Zwischenschicht, Teile der Kernschicht, und zwar die Wellenleiterkerne aus Glas, sowie die Mantelschicht. Die Mantelschicht bildet auf Grund von Fließvorgängen bei ihrem Aufbringen auf der vom Substrat abgewandten Seite eine etwa parallele Fläche zur Substratoberfläche.

Der Fremdbereich wird bei einer nächsten Weiterbildung aus einem Material mit einem thermooptischen Koeffizienten hergestellt, dessen Betrag wesentlich vom Betrag des thermooptischen Koeffizienten des Glases abweicht. Beispielsweise werden Koeffizienten verwendet, die betragsmäßig 100-mal größer als der thermooptische Koeffizient von Glas sind. Als Bezugstemperatur wird beispielsweise die Raumtemperatur von 20 °C gewählt.

Als Material wird im Fremdbereich bei einer nächsten Ausgestaltung Kunststoff eingesetzt, zum Beispiel ein Polymer. Ein Polymer mit positivem thermooptischen Koeffizienten ist z. B. ein Fluoracrylatpolymer, das Pentafluorstyren (PFS), Trifluorethylmethacrylat (TFM) und Glycidylmethacrylat (GMA) enthält. Ein Polymer mit negativem thermooptischen Koeffizienten ist z. B. das Benzocyclobutenharz (BCB), das von der Firma Dow Chemical unter dem Markennamen Cyclotene vertrieben wird. Dabei handelt es sich um ein Polymer, das aus Divinyldisiloxan-bis-benzocyclobuten-Monomeren polymerisiert wird (B-Stufe). Die Auswahl des Polymers hängt davon ab; was als "normaler" Schaltzustand benötigt wird. Es wird ein Polymer mit einem thermooptischen Koeffizienten gewählt, der insgesamt eine geringere Heizleistung benötigt.

Bei einer Ausgestaltung erstreckt sich der Fremdbereich von der dem Substrat abgewandten Fläche des Wellenleiterbereichs bis in die Nähe des Wellenleiters. Diese Anordnung ist eine Folge der angewandten Herstellungstechnologie. Das Einbringen eines Grabens ist von der dem Substrat abgewandten Fläche des Wellenleiterbereichs aus möglich. Wird anschließend das Material des Fremdbereichs in den Graben eingebracht, so reicht es bis an den Rand des Grabens bzw. darüber hinaus.

Bei einer anderen Ausgestaltung hat der Wellenleiterkern eine größere Brechzahl als der Wellenleitermantel, und die Brechzahl des Materials im Fremdbereich ist abhängig von der vom durch die Temperatureinstelleinheit erzeugten Temperatur und kann bei ein und derselben Wellenleiteranordnung, abhängig von der Betriebsart, kleiner, gleich oder größer als die Brechzahl des Wellenleitermantels sein. Durch diese Art der Wahl von Brechzahlen lassen sich Wellenleiteranordnungen für unterschiedliche Aufgaben bauen. Beispiele für verschiedene Bauelemente und die dafür benötigten Brechzahlen werden weiter unten angegeben.

Erfindungsgemäss erstreckt sich der Fremdbereich etwa parallel zum Wellenleiter aus Glas. Da Wellenleiter und Fremdbereich so nahe aneinander angeordnet sind, dass eine sich im Wellenleiter ausbreitende Welle beeinflusst wird, ist die Stärke der Beeinflussung sowohl von der Länge der Strecke abhängig, in denen Fremdbereich und Wellenleiter etwa parallel zueinander liegen, als auch von der durch die Temperatur bewirkten Brechzahl im Fremdbereich. Es eröffnen sich vielfältige Steuermöglichkeiten und Schaltprinzipien.

Der Fremdbereich wird erfindungsgemäss nach oben und zur Seite von Wellenleiter versetzt angeordnet. Durch diese Maßnahme muss beim Einsatz lithografischer Verfahren beim Ätzen des Grabens für den Fremdbereich nicht befürchtet werden, dass der Wellenleiterbereich ungewollt zerstört wird, wie es der Fall wäre, wenn der Graben unmittelbar über dem Wellenleiter geätzt werden müsste. In diesem Fall würde der Wellenleiter innerhalb des Bereichs angeordnet sein, der zwischen Fremdbereich und Substrat liegt. Durch das Anordnen des Fremdbereichs mit Versatz können größere Toleranzen beim Ätzen des Grabens vorgegeben werden.

Ein thermooptischer Abschwächer, der nach einem anderen Prinzip arbeitet, entsteht, wenn der Wellenleiter entlang der Ausbreitungsrichtung der Wellen gekrümmt ist. Der Fremdbereich ist an den gekrümmten Bereichen des Wellenleiters angeordnet. Abhängig von der Temperatur der Temperatureinstelleinheit wird eine sich im Wellenleiter aus Glas ausbreitende Welle mehr oder weniger stark in den Fremdbereich gezogen und strahlt von dort in den Wellenleitermantel ab.

Erfindungsgemäss haben der Wellenleiter aus Glas und der Fremdbereich etwa den gleichen Querschnitt, so sind sie als Wellenleiter zum Leiten der gleichen Wellenart geeignet. Eine Welle lässt sich mit relativ geringen Übertragungsverlusten aus dem Wellenleiter aus Glas in den Fremdbereich oder in umgekehrter Richtung leiten. Dies ist die Grundlage für viele Schaltvorgänge.

Ein thermooptischer Umschalter entsteht bei einer Wellenleiteranordnung, bei der der Wellenleiterbereich zwei etwa parallel verlaufende Wellenleiter enthält, zwischen denen der Fremdbereich angeordnet ist. Der Fremdbereich lässt sich so klein ausbilden, dass er abhängig von der Temperatur eine in dem einen Wellenleiter übertragene Welle in den anderen Wellenleiter überträgt. Bei kleinem Fremdbereich bleiben die 0-bertragungsverluste in dem Polymer gering. Eine Wellenleitung im Fremdbereich selbst ist nicht erforderlich.

Liegt bei einer nächsten Ausgestaltung zwischen Temperatureinstelleinheit und Fremdbereich eine Zwischenschicht aus einem Material, das verhindert, dass das optische Feld an die Temperatureinstelleinheit gelangt, so lassen sich Wellen im Fremdbereich relativ verlustarm übertragen.

Bei einer alternativen Ausgestaltung wird jedoch die Temperatureinstelleinheit unmittelbar am Fremdbereich angeordnet. Die Temperatureinstelleinheit schwächt damit eine sich im Fremdbereich ausbreitende Welle und hat damit neben der Abgabe oder dem Aufnehmen von Wärme eine Doppelfunktion. Das Absorbieren einer Welle ist für viele Anwendungszwecke besser als das diffuse Abstrahlen der Energie in den Wellenleiterbereich. Es lässt sich ein Abschwächer bauen, bei dem zum einen die Temperatureinstelleinheit die sich im Fremdbereich ausbreitende Welle absorbiert und bei der zum anderen das Material des Fremdbereichs so gewählt wird, dass es ein schlechtes Übertragungsverhalten hat. Der Nachteil des Polymers, größere Übertragungsverluste als einen Glaswellenleiter zu haben, kann somit für einen Abschwächer als Vorteil genutzt werden.

Im Folgenden werden Ausführungsbeispiele der Erfindung anhand der beiliegenden Zeichnungen erläutert. Darin zeigen:
Fig. 1 eine Draufsicht eines thermooptischen Abschwächers,
Fig. 2A bis 2C den thermooptischen Abschwächer gemäß Fig. 1 in drei Betriebsarten,
Fig. 3 den Querschnitt eines thermooptischen Abschwächers mit gekrümmtem Wellenleiter,
Fig. 4A und 4B den thermooptischen Abschwächer gemäß Fig. 3 in zwei Betriebsarten,
Fig. 5 die Draufsicht auf einen thermooptischen Umschalter,
Fig. 6A und 6B den thermooptischen Umschalter gemäß Fig. 5 in zwei Betriebsarten,
Fig. 7A, 7B und 7C Querschnitte durch einen thermooptischen Schalter gemäss einer Ausführungsform der Erfindung in drei Betriebsarten, und
Fig. 8A bis 8C Querschnitte durch einen thermooptischen Absorber gemäss einer Ausführungsform der Erfindung.

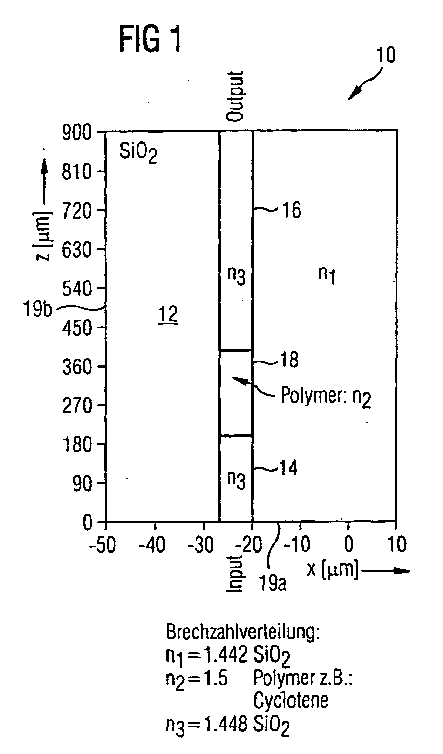

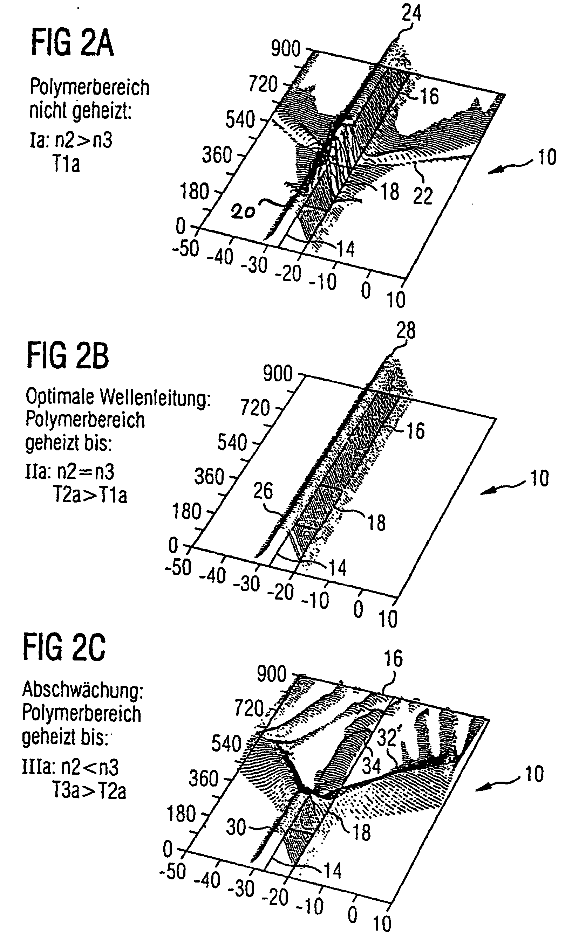

Figur 1 zeigt eine Draufsicht auf einen thermooptischen Abschwächer 10, der in einer Wellenleiterschicht 12 eingebrachte Wellenleiterkerne 14 und 16 enthält. Die Wellenleiterschicht 12 besteht aus Siliziumdioxid und hat eine Brechzahl n1 gleich 1,442. In der Wellenleiterschicht 12 sind die Wellenleiterkerne 14 und 16 allseitig eingebettet. Die Wellenleiterkerne 14 und 16 bestehen ebenfalls als Siliziumdioxid, haben jedoch eine Brechzahl n3 gleich 1,448. Ein Polymerbereich 18 liegt zwischen den Wellenleiterkernen 14 und 16. Quer zur Ausbreitungsrichtung einer Welle in den Wellenleiterkernen 14, 16 haben die Wellenleiterkerne 14, 16 und der Polymerbereich 18 die gleiche Ausdehnung. Der Polymerbereich 18 erstreckt sich von der Oberfläche der Wellenleiterschicht 12 bis zu den Flächen der Wellenleiterkerne 14, 16, die einem nicht dargestellten Substrat zugewandt sind. Der Polymerbereich 18 hat bei Raumtemperatur eine Brechzahl n2 gleich 1,5. Mit Hilfe eines über dem Polymerbereich 18 angeordneten Heizelementes (nicht dargestellt) lässt sich der Wert der Brechzahl n2 in weiten Bereichen ändern, wie unten anhand der Fig. 2A bis 2C erläutert. Der Polymerbereich 18 besteht aus dem Material Cyclotene, das von der Firma Dow Chemical vertrieben wird. Cyclotene hat einen sehr großen negativen Temperaturkoeffizienten.

Eine Abszissenachse 19a zeigt die Längenabmessungen des Abschwächers 10 in x- Richtung. Eine Ordinatenachse 19b zeigt Längenabmessungen in z- Richtung. So ist die Breite des Wellenleiterkerns 14 etwa 8 µm. Der Abschwächer 10 ist etwa 900 µm lang.

Der thermooptische Abschwächer 10 schwächt eine zunächst im Wellenleiterkern 14 übertragene Welle abhängig von der Temperatur des Polymerbereichs 18 ab oder lässt sie zum Wellenleiterkern 14 durch. Der Wellenleiterkern 14 ist somit ein Eingang und der Wellenleiterkern 16 ein Ausgang. Die genaue Funktionsweise des thermooptischen Abschwächers wird im Folgenden anhand der Fig. 2A bis 2C erläutert.

Die Figuren 2A, 2B und 2C zeigen den Abschwächer 10 in drei Betriebsarten Ia, IIa und IIIa. In allen drei Betriebsarten Ia, IIa, IIIa wird eine Welle in den Wellenleiterkern 14 eingekoppelt. Diese Welle breitet sich in Richtung zum Polymerbereich 18 hin aus. In den Fig. 2A, 2B und 2C sind jeweils Intensitätsverteilungen in einer Ebene dargestellt, die parallel zum Substrat und in der Mitte der Wellenleiterkerne 14,16 liegt. Die Intensität ergibt sich aus der Summe der Betragsquadrate der Komponenten der elektrischen Feldstärke.

Figur 2A zeigt die Betriebsart Ia, bei der der Polymerbereich nicht geheizt wird und eine Temperatur T1a hat. In der Betriebsart Ia ist die Brechzahl n2 des Polymerbereichs 18 größer als die Brechzahl n3 und damit auch größer als die Brechzahl n1. Die Brechzahl n2 des Polymerbereichs 18 ist somit größer als die des den Polymerbereich 18 umgebenden Materials mit der Brechzahl n1. Der Polymerbereich 18 kann deshalb eine Welle übertragen, die als Eingangswelle 20 eingekoppelt wird Da jedoch die Brechzahl n2 des Polymerbereichs 18 von der Brechzahl n3 des Wellenleiterkerns 14 bzw. des Wellenleiterkerns 16 abweicht, bilden die Grenzen zwischen dem Polymerbereich 18 und dem Wellenleiterkern 14 bzw. dem Wellenleiterkern 16 Störstellen, die zu Übertragungsverlusten führen. Eine Streuwelle 22 geringer Intensität im Vergleich zu der vom Wellenleiterkern 14 kommenden Eingangswelle 20 wird deshalb in die Wellenleiterschicht 12 abgestrahlt. Der Großteil der Eingangswelle wird jedoch durch den Polymerbereich 18 übertragen und als Ausgangswelle 24 mit Hilfe des Wellenleiterkerns 16 weitergeleitet.

Die Betriebsart Ia wird in der Praxis als Zwischenstadium zwischen den an Hand der Figuren 2B und 2C erläuterten Betriebsarten IIa und IIIa eingesetzt.

Figur 2B zeigt den Abschwächer 10 in der Betriebsart IIa. Die Temperatur T2a des Polymerbereiches 18 ist in der Betriebsart IIa größer als die Temperatur T1a. Deshalb ist in der Betriebsart IIa die Brechzahl n2 des Polymerbereichs 18 gleich der Brechzahl n3 des Wellenleiterkerns 14 bzw. des Wellenleiterkerns 16. Dies bedeutet, dass der Polymerbereich 18 an den Wellenleiterkern 14 und den Wellenleiterkern 16 angepasst ist. Eine Eingangswelle 26 wird in den Wellenleiterkern 14 eingekoppelt und nahezu verlustlos über den Polymerbereich 18 bis zum Wellenleiterkern 16 übertragen und erscheint am Ausgang des Abschwächers 10 als Ausgangswelle 28.

In der Betriebsart IIa arbeitet der thermooptische Abschwächer somit als nahezu verlustlos übertragender Wellenleiter.

Figur 2C zeigt den thermooptischen Abschwächer 10 in einer Betriebsart IIIa , bei der der Polymerbereich 18 noch stärker aufgeheizt ist als in der Betriebsart IIa. Die Temperatur T3a des Polymerbereiches 18 ist größer als die Temperatur T2a. Dadurch ist die Brechzahl n2 des Polymerbereichs 18 kleiner als die Brechzahl n1 und somit auch kleiner als die Brechzahl n3. Da die Brechzahl n2 des Polymerbereichs 18 kleiner als die Brechzahl n1 des umgebenden Mediums ist, kann der Polymerbereich 18 in der Betriebsart IIIa nicht als Wellenleiter arbeiten. Eine am Eingang des Abschwächers 10 eingekoppelte Eingangswelle 30 wird an der Grenzfläche zwischen Wellenleiterkern 14 und Polymerbereich 18 fast vollständig in das umgebende Medium abgestrahlt und breitet sich in diesem als Streuwelle 32 hoher Intensität aus. Zum Wellenleiterkern 16 gelangt nur eine im Vergleich zur Eingangswelle 30 und zur Streuwelle 32 stark gedämpfte Restwelle 34, die am Ausgang des Abschwächers 10 austritt.

In der Betriebsart IIIa beeinflusst der Abschwächer 10 die eintretende Welle am stärksten. Befindet sich beispielsweise am Ausgang des Abschwächers 10 ein Sensorelement, so gelangt in der Betriebsart IIIa die geringste Energie auf das Sensorelement.

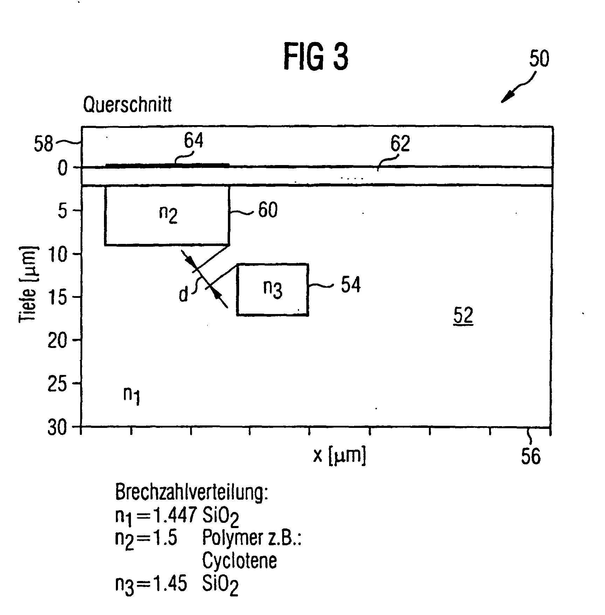

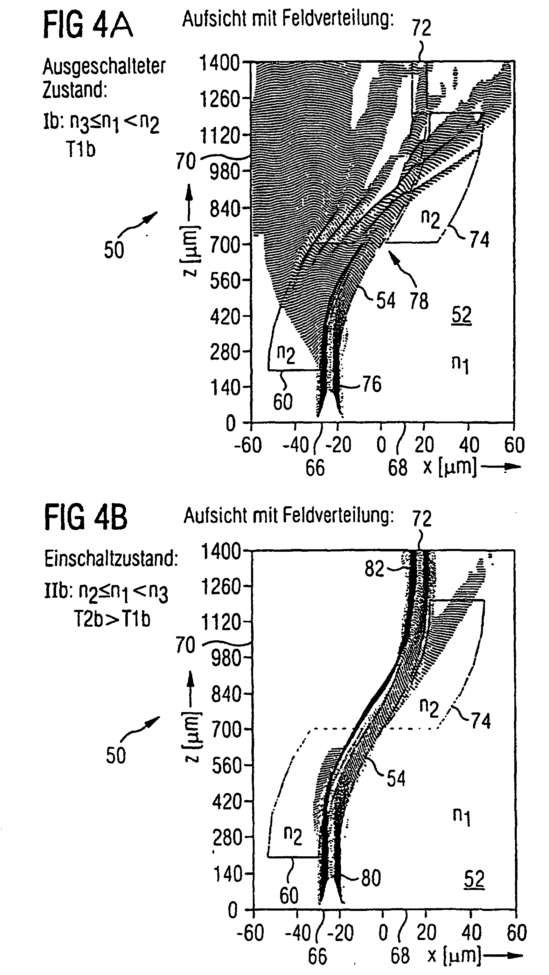

Figur 3 zeigt den Querschnitt eines thermooptischen Abschwächers 50 der in einer Wellenleiterschicht 52 einen Wellenleiterkern 54 enthält, der sich entlang der Ausbreitungsrichtung der Wellen krümmt, siehe Figuren 4A und 4B. Die Wellenleiterschicht 52 besteht aus Siliziumdioxid mit einer Brechzahl n1 gleich 1,447. Der Wellenleiterkern 54 besteht ebenfalls aus Siliziumdioxid, hat jedoch eine Brechzahl n3 gleich 1,45. Der Wellenleiterkern 54 hat einen rechteckigen Querschnitt und ist so bemessen, dass eine Lichtwelle mit einer Wellenlänge von 1550 Nanometer (nm) nahezu verlustfrei weitergeleitet wird.

Zur Verdeutlichung der Abmessungen des Abschwächers 50 zeigt eine Abszissenachse 56 Längenwerte in horizontal verlaufender x-Richtung. Eine Ordinatenachse 58 zeigt Längenwerte in y-Richtung, die senkrecht zur x-Richtung liegt. Auf der Abszissenachse 56 und der Ordinatenachse 58 sind Längenwerte in µm abgetragen. Der Wellenleiterkern 52 hat in x-Richtung eine Ausdehnung von etwa 6 µm und in y-Richtung eine Ausdehnung von etwa 6 µm.

Sowohl in x-Richtung als auch in y-Richtung zum Wellenleiterkern 54 versetzt ist ein Polymerbereich 60 mit rechteckförmigem Querschnitt angeordnet. Der Polymerbereich 60 verläuft parallel zu einem Abschnitt des Wellenleiterkerns 54 in Ausbreitungsrichtung der Wellen, siehe Figuren 4A und 4B. Der Polymerbereich 60 befindet sich in y-Richtung weiter von einem nicht dargestellten Substrat entfernt als der Wellenleiterkern 54. Ein Abstand d zwischen der oberen linken Kante des Wellenleiterkerns 54 und der unteren rechten Kante des Polymerbereichs 60 beträgt nur wenige µm, zum Beispiel 2 µm. Da die Welle sowohl im Wellenleiterkern 54 als auch in den diesem Wellenleiterkern 54 unmittelbar benachbarten Bereichen übertragen wird, kann sie durch den Polymerbereich 60 in ihrer Ausbreitung beeinflusst werden.

Der Polymerbereich 60 besteht aus Cyclotene und hat bei Zimmertemperatur, d.h. bei 20 °C, eine Brechzahl n2 circa 1,5.

Der Polymerbereich 60 grenzt an eine auf der Oberfläche der Wellenleiterschicht 52 liegende Polymerschicht 62.an. Auf der Polymerschicht 62 befindet sich im Bereich des Polymerbereichs 60 eine Elektrode 64, die als Heizelement ausgebildet ist.

Abhängig von der durch die Elektrode 64 erzeugten Temperatur im Polymerbereich 60 arbeitet der Abschwächer 50 in einer von zwei Betriebsarten Ib und IIb, die im Folgenden an Hand der Figuren 4A und 4B erläutert werden.

Die Figuren 4A und 4B zeigen den thermooptischen Abschwächer 50 in zwei Betriebsarten Ib und IIb. In den Figuren 4A und 4B wird eine parallel zur Substratoberfläche liegende Ebene durch den Abschwächer 50 in Draufsicht gezeigt. Außerdem ist die Intensitätsverteilung innerhalb des Abschwächers 50 dargestellt, die aus einer an einem Eingang 66 des Abschwächers 50 eingekoppelten Eingangswelle in den verschiedenen Betriebsarten Ib und IIb resultiert. In den Figuren 4A und 4B ist außerdem jeweils eine Abszissenachse 68 und eine Ordinatenachse 70 dargestellt, auf denen Längenangaben in der Einheit µm abgetragen sind. Der Polymerbereich 60 hat beispielsweise in z-Richtung eine Länge von etwa 500 µm.

Der Wellenleiterkern 54 ist in seinem Verlauf vom Eingang 66 zu einem Ausgang 72 des Abschwächers 50 2-mal gekrümmt. Die erste Krümmung verläuft nach rechts und liegt im Bereich des Polymerbereichs 60. Daran anschließend ist der Wellenleiterkern 54 nach links gekrümmt. Im Bereich dieser Krümmung liegt ein weiterer Polymerbereich 74, der ebenfalls aus einem Polymer mit der Brechzahl n2 besteht. Die Polymerbereiche 60 bzw. 74 liegen jeweils auf der konvexen Seite im Krümmungsverlauf des Wellenleiterkerns 54.

Auch oberhalb des Polymerbereichs 74 befindet sich eine (nicht dargestellte) Elektrode zum Vorgeben der Temperatur im Polymerbereich 74.

Figur 4A zeigt den Abschwächer 50 im Betriebszustand Ib. An der Elektrode 64 und der über dem Polymerbereich 74 angeordneten Elektrode liegt im Betriebszustand Ib keine Spannung an. Die Elektroden heizen somit nicht. T1b bezeichnet die Temperatur in den Polymerbereichen 60 und 74. In der Betriebsart Ib ist die Brechzahl n2 der Polymerbereiche 60 und 74 größer als die Brechzahl n1 bzw. die Brechzahl n3. Damit können die Polymerbereiche 60 und 74 als Wellenleiter arbeiten. Eine am Eingang 66 eingekoppelte Eingangswelle 76 wird fast vollständig in den Polymerbereich 60 gezogen und breitet sich dort aus. An den Rändern des Polymerbereichs 60 treten Streuwellen 78 auf, die sich in der Wellenleiterschicht 52 diffus ausbreiten. Am Ausgang 72 tritt nur eine Welle geringer Intensität auf.

Der Polymerbereich 74 schwächt eine im Wellenleiterkern 54 übertragene Restwelle weiter.

Die Betriebsart Ib wird beispielsweise eingesetzt, wenn ein am Ausgang 72 angeordnetes Sensorelement im Ruhezustand sein soll.

Figur 4B zeigt den Abschwächer 50 in der Betriebsart IIb. In der Betriebsart IIb führen die Elektrode 64, siehe Figur 3, und die über dem Polymerbereich 74 angeordnete Elektrode Spannung und erwärmen die Polymerbereiche 60 und 74 auf eine Temperatur T2b, die oberhalb der Temperatur T1b des Betriebszustandes Ib liegt. Dadurch verkleinert sich der Wert der Brechzahl n2 im Vergleich zum Betriebszustand Ib. Die Brechzahl n2 ist im Betriebszustand IIb kleiner oder gleich der Brechzahl n1 der Wellenleiterschicht 52 und damit auch kleiner als die Brechzahl n3. Da die Brechzahl n2 der Polymerbereiche 60 bzw. 74 kleiner oder gleich der Brechzahl des umgebenden Mediums der Wellenleiterschicht 52 ist, können die Polymerbereiche 60 und 74 nicht als Wellenleiter arbeiten. Eine am Eingang 66 eingekoppelte Eingangswelle 80 wird entlang des Wellenleiterkerns 54 im Wesentlichen ungestört zum Ausgang 72 übertragen und erscheint dort als Ausgangswelle 82.

Der Abschwächer 50 lässt somit im eingeschalteten Zustand, d.h. in der Betriebsart IIb, die Eingangswelle 80 durch. Im Betriebszustand Ib, d.h. im ausgeschalteten Zustand des Abschwächers 50, wird dagegen eine Eingangswelle 76 in die Wellenleiterschicht 52 abgestrahlt. Somit lässt sich der Abschwächer 50 auch als Schalter einsetzen.

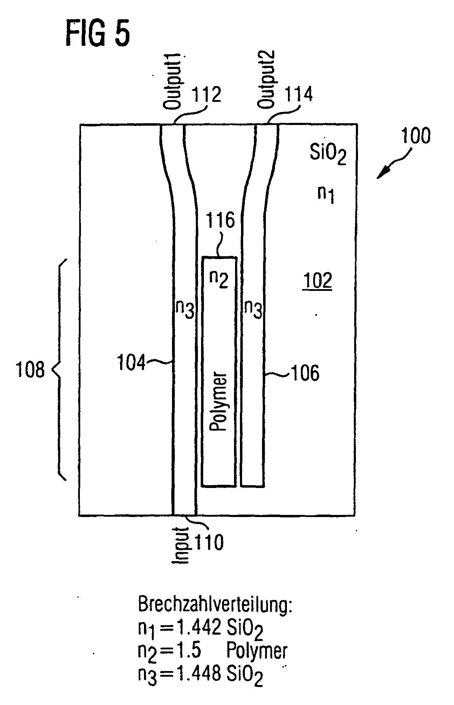

Figur 5 zeigt die Draufsicht auf einen thermooptischen Umschalter 100, der in einer Wellenleiterschicht 102 zwei Wellenleiterkerne 104 und 106 enthält, die in einem Bereich 108 parallel zueinander verlaufen. Die Wellenleiterschicht 102 besteht aus Siliziumdioxid mit einer Brechzahl n1 gleich 1,442. Die Wellenleiterkerne 104 und 106 bestehen ebenfalls aus Siliziumdioxid, haben aber eine Brechzahl n3 gleich 1,448.Der Wellenleiterkern 104 verläuft von einem Eingang 110 zu einem Arbeitsausgang 112. Der Wellenleiterkern 106 verläuft vom Abschnitt 108 zu einem Ruheausgang 114.

Zwischen den Wellenleiterkernen 104 und 106 befindet sich im Bereich des Abschnitts 108 ein Polymerbereich 116 aus Cyclotene, das bei Zimmertemperatur (20 °C) eine Brechzahl n2 gleich 1,5 hat. Der Polymerbereich 116 erstreckt sich einerseits parallel zu den Wellenleiterkernen 104 und 106. Andererseits erstreckt sich der Polymerbereich 116 von der Oberfläche der Wellenleiterschicht 102 bis in eine Tiefe, in die auch die Wellenleiterkerne 104 und 106 reichen. Die Wellenleiterkerne 104 und 106 sind jedoch im Gegensatz zum Polymerbereich 116 vollständig von dem Siliziumdioxid der Wellenleiterschicht mit der Brechzahl n1 umgeben.

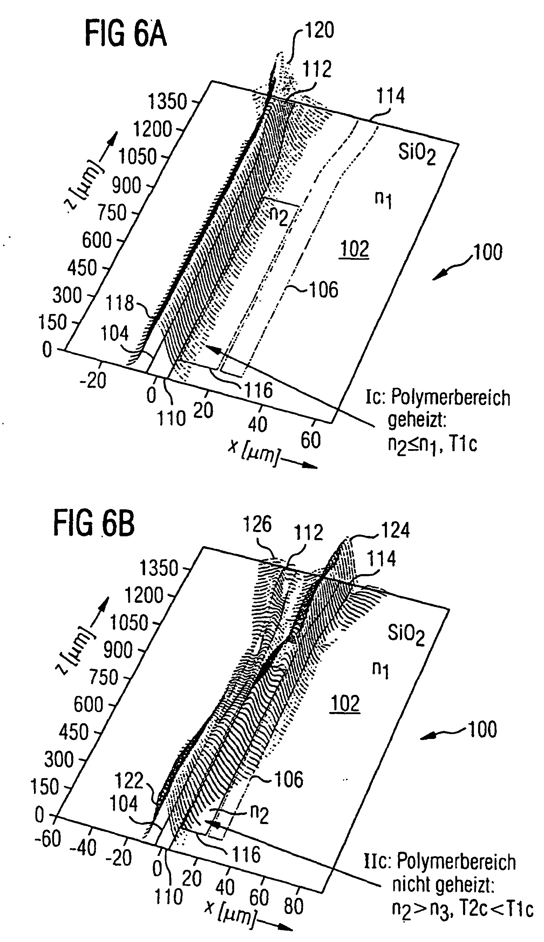

Die Figuren 6A und 6B zeigen zwei Betriebsarten Ic und IIc des thermooptischen Umschalters 100. Dargestellt ist die Intensitätsverteilung der elektrischen Komponente einer elektromagnetischen Welle in einer durch die Mittelachsen der Wellenleiterkerne 104 und 106 gelegten Ebene. In Längsrichtung der Wellenleiterkerne 104 und 106 sind auf der linken Seite der Ebene Längenangaben in Mikrometern angegeben. Der gezeigte Ausschnitt liegt an z-Positionen von 0 Mikrometern bis etwa 1350 Mikrometern. Am unteren Rand der Ebene sind Längenangaben der x-Richtung in Mikrometern angegeben. Die Mittelachse des Wellenleiterkerns 104 liegt bei 0 Mikrometern. Die in den Figur 6A und 6B gezeigten Ebenen erstrecken sich von etwa -40 Mikrometern bis etwa 60 Mikrometern in x-Richtung.

Figur 6A zeigt den Betriebszustand Ic, in welchem der Polymerbereich 116 durch die nicht dargestellten Elektroden auf eine Temperatur T1c geheizt wird. Bei der Temperatur T1c ist die Brechzahl n2 des Polymerbereichs 116 kleiner oder gleich der Brechzahl n1 der den Polymerbereich 116 und die Wellenleiterkerne 104 und 106 umgebenden Polymerschicht 102. Der Polymerbereich 116 kann aufgrund der kleinen Brechzahl n2 nicht als Wellenleiter arbeiten. Eine am Eingang 110 des Umschalters 100 eingekoppelte Eingangswelle 118 wird durch den Wellenleiterkern 104 praktisch unverändert zum Arbeitsausgang 112 geleitet und erscheint dort als Ausgangswelle 120. In der Betriebsart Ic tritt am Ruheausgang 114 keine Welle auf.

Figur 6B zeigt den thermooptischen Umschalter 100 in der Betriebsart IIc, in welcher der Polymerbereich 116 nicht geheizt wird, d. h. der Umschalter 100 befindet sich im Ruhezustand. In der Betriebsart IIc arbeitet der Umschalter 100 bei einer Temperatur T2c, die kleiner als die Temperatur T1c ist. Aufgrund des negativen thermooptischen Koeffizientens des Polymerbereiches 116 ist der Wert der Brechzahl n2 bei der Temperatur T2c größer als bei der Temperatur T1c. Die Brechzahl n2 des Polymerbereiches 116 ist in der Betriebsart IIc größer als die Brechzahl n3 der Wellenleiterkerne 104 und 106 und damit auch größer als die Brechzahl n1 der Wellenleiterschicht 102. Aufgrund dieses Brechzahlverhältnisses kann der Polymerbereich 116 eine sich im Wellenleiterkern 112 ausbreitende Welle beeinflussen. Der Polymerbereich 116 arbeitet als Kopplungsbereich zwischen den Wellenleiterkernen 104 und 106. Eine Eingangswelle 122 am Eingang 110 wird im Bereich des Polymerbereiches 116 in den Wellenleiterkern 114 übergekoppelt und erscheint am Ruheausgang 114 als Ausgangswelle 124. In der Betriebsart IIc erscheint von der Eingangswelle 122 nur ein kleiner Teil als Restwelle 126 am Arbeitsausgang 112. Die Intensität der Restwelle 126 ist um Größenordnungen geringer als die Intensität der Ausgangswelle 124.

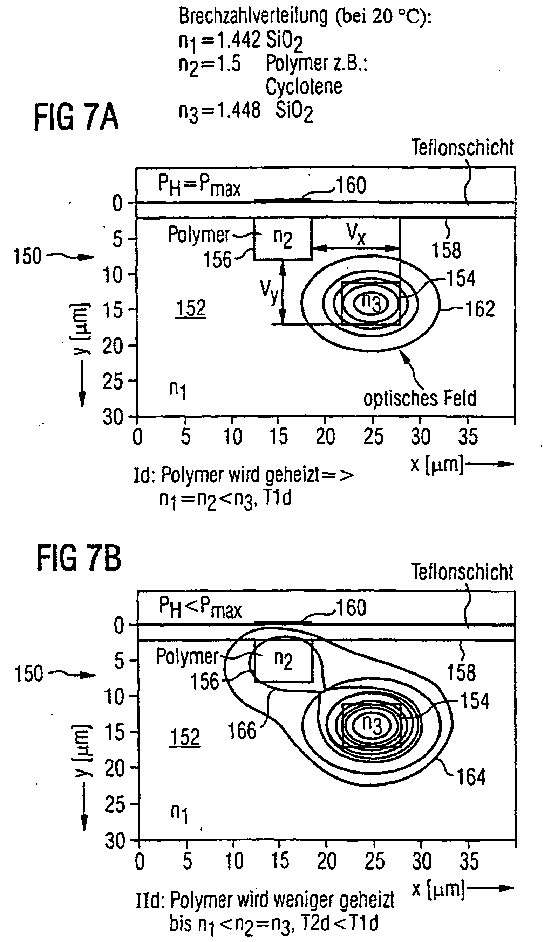

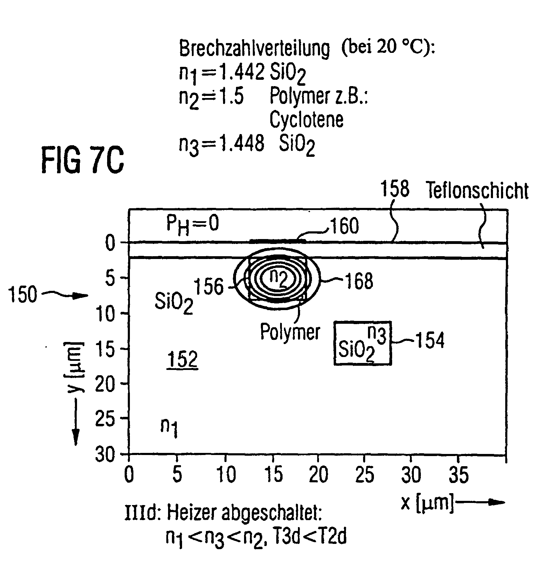

Die Figuren 7A, 7B und 7C zeigen Querschnitte durch einen thermooptischen Abschwächer 150 gemäss einer Ausführungsform der Erfindung. Der Abschwächer 150 enthält auf einem nicht dargestellten Substrat aus Silizium eine Wellenleiterschicht 152 aus Siliziumdioxid mit einer Brechzahl n1 gleich 1,442 bei Raumtemperatur, d. h. bei 20°C. In der Wellenleiterschicht 152 ist ein Wellenleiterkern 154 eingebettet, der einen verzerrt dargestellten quadratischen Querschnitt hat und ebenfalls aus Siliziumdioxid, jedoch mit einer Brechzahl n3 gleich 1,448 besteht. In die Wellenleiterschicht 152 wurde ein Graben geätzt, der parallel zum Wellenleiterkern 154 verlief. Der Graben wurde anschließend mit dem Polymer Cyclotene gefüllt, so dass ein Polymerbereich 156 gebildet wird. Der Polymerbereich 156 hat quer zur Ausbreitungsrichtung von Wellen den gleichen Querschnitt wie der Wellenleiterkern 154. Bei Zimmertemperatur, d.h. bei 20°C hat der Polymerbereich 156 eine Brechzahl n2 gleich 1,5. Der Polymerbereich 156 verläuft jedoch nur in einem relativ kurzen Abschnitt neben dem Wellenleiterkern 154, z. B. für eine Strecke von 500 Mikrometern. Oberhalb des Polymerbereichs 156 und oberhalb der Wellenleiterschicht 152 ist eine dünne Teflonschicht 158 mit einer Schichthöhe von etwa 2 Mikrometern aufgebracht. Die Teflonschicht 158 hat einen Brechungsindex, der etwa dem Brechungsindex n1 entspricht. Damit verhindert die Teflonschicht 158, daß Wellen aus dem Polymerbereich 156 eine Heizelektrode 160 erreichen, die oberhalb des Polymerbereichs 156 auf der Teflonschicht 158 liegt.

In den Figuren 7A, 7B und 7C sind in vertikaler x-Richtung und in vertikaler y-Richtung Längenangaben in Mikrometern abgetragen. Die Oberfläche der Teflonschicht 158 liegt bei 0 Mikrometer in y-Richtung. Der Wellenleiterkern 154 und der Polymerbereich 156 haben jeweils in x-Richtung eine Ausdehnung von etwa 6 Mikrometer und in y-Richtung ebenfalls eine Ausdehnung von etwa 6 Mikrometern. In x-Richtung ist der Polymerbereich 156 um einen Versatz Vx von etwa 9 Mikrometern versetzt (von Mitte zu Mitte). In y-Richtung besteht ebenfalls ein Versatz Vy von etwa 9 Mikrometern. Damit beträgt die kleinste Entfernung zwischen Wellenleiterkern 154 und Polymerbereich 156 nur wenige Mikrometer. Dies führt dazu, dass sich die Ausbreitung einer Welle im Wellenleiterkern 154 und in den unmittelbar um den Wellenleiterkern 154 liegenden Bereich der Wellenleiterschicht 152 mit Hilfe des Polymerbereichs 156 beeinflussen lässt.

In einer Betriebsart Id wird der Abschwächer 150 mit Hilfe der Heizelektrode 160 durch Zuführen einer maximalen Heizleistung Pmax auf eine Temperatur T1d aufgeheizt. Bei dieser Temperatur ist die Brechzahl n2 des Polymerbereichs gleich der Brechzahl n1 gleich 1,442, d. h. gleich der Brechzahl der Wellenleiterschicht 52, die den Polymerbereich 156 umgibt. Somit kann der Polymerbereich 156 in der Betriebsart Id nicht als Wellenleiter arbeiten. Eine in den Wellenleiterkern 154 eingekoppelte Welle breitet sich ungehindert aus und wird nicht durch den Polymerbereich 156 beeinflusst. In Figur 7A sind Äqui-Intensitätslinien einer solchen Welle eingezeichnet, z. B. die Äqui-Intensitätslinie 162.

Figur 7B zeigt den thermooptischen Abschwächer 150 in einer Betriebsart IId. In dieser Betriebsart IId wird der Heizelektrode 160 eine Heizleistung PH zugeführt, die kleiner als die maximale Heizleistung Pmax der Heizelektrode 160 ist. Dadurch ist die Temperatur T2d des Polymerbereichs 156 in der Betriebsart IId kleiner als die Temperatur T1d. Aufgrund der veränderten Temperatur liegt in der Betriebsart IId die Brechzahl n2 des Polymerbereichs 156 über der Brechzahl n1 der den Polymerbereich 156 umgebenden Wellenleiterschicht 152. In der Betriebsart IId ist die Brechzahl n2 gleich der Brechzahl n3 des Wellenleiterkernes 154. Dies führt dazu, daß der Polymerbereich 156 einen Teil der sich im Wellenleiterkern 156 ausbreitenden Welle "absaugt". Äqui-Intensitätslinien 164 und 166 umfassen sowohl den Wellenleiterkern 154 als auch den Polymerbereich 156. Durch dieses "Absaugen" wird die Intensität einer sich im Wellenleiterkern 154 ausbreitenden Welle geschwächt.

Figur 7C zeigt den thermooptischen Abschwächer 150 in einer Betriebsart IIId, bei der die Heizelektrode 160 im spannungsfreien Zustand ist. Die Heizleistung PH beträgt 0 Watt. Die Temperatur T3d des Polymerbereichs 156 liegt unterhalb der Temperatur T2d. Dadurch liegt die Brechzahl n2 des Polymerbereichs 156 über der Brechzahl n3 des Wellenleiterkerns 154 und auch über der Brechzahl n1 der Wellenleiterschicht 152, die auch den Polymerbereich 156 umgibt. Der Polymerbereich 156 ist deshalb in der Betriebsart IIId besser zum Leiten einer Welle geeignet als der Wellenleiterkern 154. Der in Figur 7C gezeigte Querschnitt liegt an dem Ende des Polymerbereichs 156, das durch eine in den Abschwächer 150 eintretende Welle später als das andere Ende des Polymerbereichs 156 erreicht wird. Eine Welle, die sich im Wellenleiterkern ausbreitet, wird bis zu dem in Figur 7C dargestellten Querschnitt vollständig aus dem Wellenleiterkern 154 in den Polymerbereich 156 eingekoppelt. Äqui-Intensitätslinien 168 umfassen deshalb nur den Polymerbereich 156.

Der in den Figuren 7A, 7B und 7C dargestellte Abschwächer 150 läßt sich somit beispielsweise als Schalter einsetzen. In der Betriebsart Id gelangt eine Welle unbeeinflusst durch den Abschwächer 150. In der Betriebsart IIId ist dagegen der "Schalter" unterbrochen und eine eintretende Welle kann den Wellenleiterbereich 154 nicht passieren, da sie in den Polymerbereich 156 übergekoppelt wird.

Wird der Abschwächer 150 zur Signalanpassung eingesetzt, so werden alle drei Betriebsarten Id, IId und IIId genutzt. Ein Sensorelement befindet sich beispielsweise am Ausgang des Wellenleiterkerns 154. In der Betriebsart Id wird eine in den Wellenleiterkern eintretende Welle ungehindert zum Sensorelement übertragen. In der Betriebsart IId gelangt nur ein Teil der in den Wellenleiterkern 154 eingekoppelten Welle zum Sensorelement. In der Betriebsart IIId kann eine sich im Wellenleiterkern 154 ausbreitende Welle dagegen nicht zum Sensorelement gelangen.

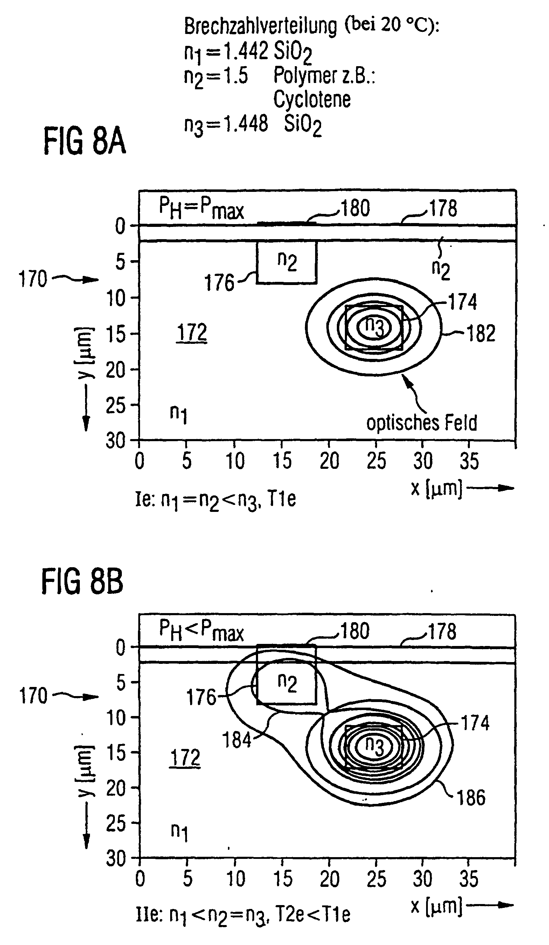

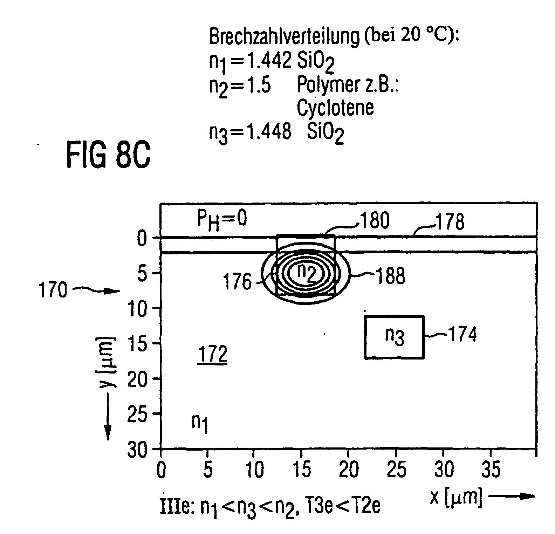

Die Figuren 8A, 8B und 8C zeigen Querschnitte durch einen thermooptischen Absorber 170 gemäss einer Ausführungsform der Erfindung. Auf einem nicht dargestellten Siliziumsubstrat befindet sich eine Wellenleiterschicht 172 aus Siliziumdioxid mit einer Brechzahl n1 gleich 1,442 bei 20°C. In die Wellenleiterschicht 172 ist mit Hilfe der in der Einleitung beschriebenen Verfahrensschritte ein Wellenleiterkern 174 eingebettet worden. Der Wellenleiterkern 174 besteht ebenfalls aus Siliziumdioxid, hat jedoch eine Brechzahl n3 gleich 1,448. Der Wellenleiterkern 174 hat einen quadratischen Querschnitt, der jedoch aufgrund der verzerrten Darstellung in den Figuren 8A, 8B und 8C rechteckig erscheint. In unmittelbarer Nähe zum Wellenleiterkern 174 wurde in die Wellenleiterschicht 172 ein Polymerbereich 176 eingebracht. Dabei wurde zunächst parallel zum Verlauf des Wellenleiterkerns 176 in einer Länge von etwa 300 Mikrometern ein Graben geätzt. Anschließend wurde ein Polymer, z. B. Cycloten, mit Hilfe eines Spinning-Verfahrens in den Graben eingebracht. Dabei entstand auf der Oberfläche der Wellenleiterschicht 172 eine Polymerschicht 178. Der Polymerbereich 176 und die Polymerschicht 178 haben eine Brechzahl n2 gleich 1,5 bei Zimmertemperatur von 20°C.

In den Figuren 8A, 8B und 8C sind am unteren bzw. am linken Rand Maßangaben für die horizontale x-Richtung und die vertikale y-Richtung in Mikrometern abgetragen. Der Wellenleiterkern 174 und der Polymerbereich 176 haben einen quadratischen Querschnitt von 6 Mikrometern mal 6 Mikrometern. Der Polymerbereich 176 ist bezüglich des Wellenleiterkerns 174 in x-Richtung und in y-Richtung jeweils um 9 Mikrometer versetzt (Mitte zu Mitte). Damit befindet sich der Polymerbereich 176 so nahe am Wellenleiterkern 174, dass eine mit Hilfe des Wellenleiterkerns 174 übertragene Welle abhängig von der Brechzahl n2 des Polymerbereichs 176 beeinflusst werden kann.

Figur 8A zeigt eine Betriebsart Ie des thermooptischen Absorbers 170, bei der eine Heizelektrode 180 mit maximaler Heizleistung Pmax betrieben wird. Die Heizelektrode 180 befindet sich unmittelbar oberhalb des Polymerbereichs 176 auf der Polymerschicht 178. In der Betriebsart Ie erwärmt sich der Polymerbereich 176 auf eine Temperatur T1e. Bei dieser Temperatur hat der Polymerbereich 176 eine Brechzahl n2, die gleich der Brechzahl n1 ist. Damit kann der Polymerbereich 176 in der Betriebsart Ie nicht als Wellenleiter arbeiten. In der Betriebsart Ie wird eine in den Wellenleiterkern 174 eingekoppelte Welle unbeeinflusst durch den Polymerbereich 176 an diesem vorbei geleitet. Äqui-Intensitätslinien 182 umfassen deshalb nur den Wellenleiterkern 174.

Figur 8B zeigt eine Betriebsart IIe, bei der die Elektrode 180 mit einer Heizleistung PH betrieben wird, die kleiner als die maximale Heizleistung Pmax ist. Eine Temperatur T2e des Polymerbereichs 176 in der Betriebsart IIe ist deshalb kleiner als die Temperatur T1e. Aufgrund der niedrigeren Temperatur T2e stellt sich im Polymerbereich 176 eine Brechzahl n2 ein, die gleich der Brechzahl n3 und somit auch größer als die Brechzahl n1 ist.

Der Polymerbereich 176 kann aufgrund dieser Brechzahlen eine Welle leiten und zieht einen Teil einer mit Hilfe des Wellenleiterkerns 174 transportierten Welle ab, vergleiche Äqui-Intensitätslinie 184 und 186, die sowohl den Polymerbereich 176 als auch den Wellenleiterkern 174 umfassen. Die im Polymerbereich 176 geleitete Welle wird jedoch durch die Heizelektrode 180 absorbiert. Das Absorbieren der Welle mit Hilfe der Heizelektrode 180 führt dazu, dass in die Wellenleiterschicht 172 weniger Energie abgestrahlt wird als bei dem anhand der Figuren 7A, 7B und 7C erläuterten optothermischen Abschwächer 150.

Figur 8C zeigt eine Betriebsart IIIe, bei der die Heizelektrode 180 spannungsfrei und damit ausgeschaltet ist. Die Heizleistung PH beträgt deshalb 0 Watt. In der Betriebsart IIIe bezeichnet T3e die Temperatur im Polymerbereich 176. Die Temperatur T3e ist kleiner als die Temperatur T2e in der Betriebsart IIe. Aufgrund der niedrigeren Temperatur T3e ist in der Betriebsart IIIe die Brechzahl n2 des Polymerbereichs 176 größer als die Brechzahl n3 im Wellenleiterkern 174 und auch größer als die Brechzahl n1 der Wellenleiterschicht 172. Aufgrund dieser Brechzahlen eignet sich der Polymerbereich 176 besser zum Transportieren einer Lichtwelle von beispielsweise 1550 Nanometern als der Wellenleiterkern 174. Wird am Eingang des Absorbers 170 eine Welle in den Wellenleiterkern 174 eingekoppelt, so ist diese Welle bei dem in Figur 8C gezeigten Querschnitt am Ende des Polymerbereiches 176 fast vollständig in den Polymerbereich 176 übergegangen, siehe Äqui-Intensitätslinien 188, welche nur den Polymerbereich 176 umfassen. Die im Polymerbereich 176 geleitete Welle wird durch die Heizelektrode 180 fast vollständig absorbiert. Die Abstrahlung in die Wellenleiterschicht 172 ist gering.

Bei anderen Ausführungsbeispielen der anhand der Figuren 3, 4A, 4B; 7A, 7B, 7C; 8A, 8B und 8C erläuterten Bauelemente werden im Polymerbereich 60, 74, 156, 176 Polymere eingesetzt, die Wellen stark dämpfen. Die mit den Bauelementen erzielte Abschwächung vergrößert sich dadurch weiter.

Bei anderen Ausführungsbeispielen werden Polymere mit anderen Eigenschaften eingesetzt, z.B. mit einem positiven thermooptischen Koeffizienten. Dadurch lässt sich das Schaltverhalten im Ruhezustand und im Betriebszustand des jeweiligen Bauelementes umkehren.

### Bezugszeichenliste

- 10: thermooptischer Abschwächer
- 12: Wellenleiterschicht
- 14, 16: Wellenleiterkern
- n1, n2, n3: Brechzahl
- 18: Polymerbereich
- Ia, IIa, IIIa: Betriebsart
- T1a, T2a, T3a: Temperatur
- 19a: Abszissenachse
- 19b: Ordinatenachse
- 20: Eingangswelle
- 22: Streuwelle
- 24: Ausgangswelle
- 26: Eingangswelle
- 28: Ausgangswelle
- 30: Eingangswelle
- 32: Streuwelle
- 34: Restwelle
- 50: thermooptischer Abschwächer
- 52: Wellenleiterschicht
- 54: Wellenleiterkern
- 56: Abszissenachse
- 58: Ordinatenachse
- 60: Polymerbereich
- d: Abstand
- 62: Polymerschicht
- 64: Elektrode
- Ib, IIb: Betriebsart
- T1b, T2b: Temperatur
- 66: Eingang
- 68: Abszissenachse
- 70: Ordinatenachse
- 72: Ausgang
- 74: Polymerbereich
- 76: Eingangswelle
- 78: Streuwelle
- 80: Eingangswelle
- 82: Ausgangswelle
- 100: thermooptischer Umschalter
- 102: Wellenleiterschicht
- 104, 106: Wellenleiterkern
- 108: Abschnitt
- 110: Eingang
- 112: Arbeitsausgang
- 114: Ruheausgang
- 116: Polymerbereich
- Ic, IIc: Betriebsart
- T1c, T2c: Temperatur
- 118: Eingangswelle
- 120: Ausgangswelle
- 122: Eingangswelle
- 124: Ausgangswelle
- 126: Restwelle
- Id, IId, IIId: Betriebsart
- T1d, T2d, T3d: Temperatur
- 150: thermooptischer Abschwächer
- 152: Wellenleiterschicht
- 154: Wellenleiterkern
- 156: Polymerbereich
- 158: Teflonschicht
- 160: Heizelektrode
- Vx, Vy: Versatz
- 162: Äqui-Intensitätslinien
- PH: Heizleistung
- Pmax: maximale Heizleistung
- 164,: 166, 168 Äqui-Intensitätslinien
- 170: thermooptischer Absorber
- Ie, IIe, IIIe: Betriebsart
- T1e, T2e, T3e: Temperatur
- 172: Wellenleiterschicht
- 174: Wellenleiterkern
- 176: Polymerbereich
- 178: Polymerschicht
- 180: Heizelektrode
- 182 bis 188: Äqui-Intensitätslinien

## Patentansprüche

1. Integrierte Wellenleiteranordnung mit:
einem aus Glas bestehenden Wellenleiterbereich (152; 172), in dem ein sich entlang einer Wellenausbreitungsrichtung erstreckender Wellenleiter mit Glaskern (154; 174) und Glasmantel angeordnet ist,
einem sich in der Nähe des Wellenleiters erstreckenden Fremdbereich (156; 176) aus einem von Glas verschiedenen Material und
einer Temperatureinstelleinheit (160; 180) zum Erwärmen und/oder Abkühlen des Fremdbereiches (156; 176), wodurch die Wellenausbreitung im Wellenleiter beeinflussbar ist,
wobei
der Fremdbereich (156; 176) in den Wellenleiterbereich (152; 172) integriert ist;
wobei der Wellenleiterbereich (152; 172) auf einem ebenen Substrat angeordnet ist und auf der vom Substrat abgewandten Seite eine etwa parallel zur Grenzfläche von Substrat und Wellenleiterbereich (152; 172) liegende Fläche bildet;
wobei der Fremdbereich (156; 176) quer zur Wellenausbreitungsrichtung sowohl parallel als auch senkrecht zur Grenzfläche von Substrat und Wellenleiterbereich (152; 172) versetzt ist vom Wellenleiter; und
wobei der Fremdbereich (156; 176) sich etwa parallel zum Wellenleiter erstreckt;
**dadurch gekennzeichnet,**
**dass**
der Wellenleiter-Glaskern (154; 174) und der Fremdbereich (156; 176) etwa den gleichen Querschnitt in Größe und Form haben.

2. Wellenleiteranordnung nach Anspruch 1,
**dadurch gekennzeichnet,**
**dass** der Fremdbereich (156; 176) ein Material mit einem thermooptischen Koeffizienten ist, dessen Betrag wesentlich größer als der Betrag des thermooptischen Koeffizienten des Glases ist und der betragsmäßig wesentlich größer als der thermooptische Koeffizient von Glas ist, insbesondere mehr als achtzig mal größer.

3. Wellenleiteranordnung nach einem der vorhergehenden Ansprüche,
**dadurch gekennzeichnet,**
**dass** der Fremdbereich (156; 176) ein Fluoracrylat-Polymer oder ein Polymer auf Benzocyclobuten-Basis enthält.

4. Wellenleiteranordnung nach einem der vorhergehenden Ansprüche,
**dadurch gekennzeichnet,**
**dass** sich der Fremdbereich (156; 176) von der dem Substrat abgewandten Fläche des Wellenleiterbereiches (152; 172) bis in die Nähe des Wellenleiters mit Glaskern (154; 174) erstreckt.

5. Wellenleiteranordnung nach einem der vorhergehenden Ansprüche,
**dadurch gekennzeichnet,**
**dass** die Brechzahl (n3) des Wellenleiterkerns (154; 174) größer ist als die Brechzahl (n1) des Wellenleiter-Glasmantels
und **dass** die Brechzahl (n2) des Materials im Fremdbereich (156; 176) abhängig von der durch die Temperatureinstelleinheit (160; 180) erzeugten Temperatur kleiner, gleich oder größer als die Brechzahl (n1) des Wellenleiter-Glasmantels ist.

6. Wellenleiteranordnung nach einem der vorhergehenden Ansprüche,
**dadurch gekennzeichnet,**
**dass** zwischen Temperatureinstelleinheit (160) und Fremdbereich (156) eine Zwischenschicht (158) aus einem Material angeordnet ist, das verhindert, dass eine sich im Fremdbereich (166) ausbreitende Welle an die Temperatureinstelleinheit (160) gelangt.

7. Wellenleiteranordnung nach einem der vorhergehenden Ansprüche,
**dadurch gekennzeichnet,**
**dass** zwischen Temperatureinstelleinheit (180) und Fremdbereich (176) eine Zwischenschicht (178) aus einem Material angeordnet ist, das dieselbe Brechzahl hat wie der Fremdbereich (176), und dass die Temperatureinstelleinheit (180) unmittelbar oberhalb vom Fremdbereich (176) auf der Zwischenschicht (178) angeordnet ist, so dass eine sich im Fremdbereich ausbreitende Welle in der Temperatureinstelleinheit (180) absorbierbar ist.

## Claims

1. Integrated waveguide arrangement having:
a waveguide region (152; 172) which consists of glass and in which a waveguide with glass core (154; 174), which extends along the propagation direction of the waves, and glass sheath are arranged,
a foreign region (156; 176) which extends in the vicinity of the waveguide and is made from a material other than glass and
a temperature-adjustment unit (160; 180) for heating and/or cooling the foreign region (156; 176), so that it is possible to influence the wave propagation in the waveguide,
the foreign region (156; 176) being integrated in the waveguide region (152; 172);
the waveguide region (152; 172) being arranged on a planar substrate and, on the side remote from the substrate, forming a surface which lies approximately parallel to the interface of substrate and waveguide region (152; 172);
the foreign region (156; 176) being offset from the waveguide transverse to the propagation direction of the waves both parallel to and perpendicular to the interface of substrate and waveguide region (152; 172); and
the foreign region (156; 176) extending approximately parallel to the waveguide;
**characterized in that**
the waveguide glass core (154; 174) and the foreign region (156; 176) are of approximately the same cross-section in terms of size and shape.

2. Waveguide arrangement according to Claim 1, **characterized in that** the foreign region (156; 176) is a material with a thermo-optical coefficient whose magnitude is significantly greater than the magnitude of the thermo-optical coefficient of the glass and which in terms of magnitude is significantly greater than the thermo-optical coefficient of glass, in particular more than eighty times greater.

3. Waveguide arrangement according to one of the preceding claims, **characterized in that** the foreign region (156; 176) contains a fluoroacrylate polymer or a benzocyclobutene-based polymer.

4. Waveguide arrangement according to one of the preceding claims, **characterized in that** the foreign region (156' 176) extends from that surface of the waveguide region (152; 172) which is remote from the substrate to close to the waveguide with glass core (154; 174).

5. Waveguide arrangement according to one of the preceding claims, **characterized in that** the refractive index (n3) of the waveguide core (154; 174) is greater than the refractive index (n1) of the waveguide glass sheath and **in that** the refractive index (n2) of the material in the foreign region (156; 176) is less than, equal to or greater than the refractive index (n1) of the waveguide glass sheath, depending on the temperature which is generated by the temperature adjustment unit (160; 180).

6. Waveguide arrangement according to one of the preceding claims, **characterized in that** an intermediate layer (158) of a material which prevents a wave which is propagating in the foreign region (166) from reaching the temperature-adjustment unit (160) is arranged between temperature-adjustment unit (160) and foreign region (156).

7. Waveguide arrangement (170) according to one of the preceding claims, **characterized in that** an intermediate layer (178) of a material which has the same refractive index as the foreign region (176) is arranged between temperature-adjustment unit (180) and foreign region (176), and **in that** the temperature-adjustment unit (180) is arranged directly above the foreign region (176) on the intermediate layer (178) in such a way that a wave which is propagating in the foreign region can be absorbed in the temperature-adjustment unit (180).

## Revendications

1. Dispositif de guide d'ondes intégré, comportant:
une zone (152 ; 172) de guide d'ondes constituée de verre, dans laquelle est disposé un guide d'ondes avec un noyau en verre (154 ; 174) et une enveloppe en verre s'étendant le long d'une direction de propagation d'ondes,
une zone étrangère (156 ; 176) en un matériau autre que du verre s'étendant à proximité du guide d'ondes, et
une unité de régulation de température (160 ; 180) destinée au chauffage et/ou au refroidissement de la zone étrangère (156 ; 176), moyen par lequel la propagation des ondes dans le guide d'ondes peut être influencée,
la zone étrangère (156 ; 176) étant intégrée dans la zone (152 ; 172) de guide d'ondes ;
la zone (152 ; 172) de guide d'ondes étant disposée sur un substrat plan, et formant sur la face opposée au substrat une surface située pour l'essentiel parallèlement à l'interface entre le substrat et la zone (152 ; 172) de guide d'ondes ;
la zone étrangère (156 ; 176) étant décalée par rapport au guide d'ondes transversalement à la direction de propagation des ondes, aussi bien parallèlement que perpendiculairement à l'interface entre le substrat et la zone (152 ; 172) de guide d'ondes ; et
la zone étrangère (156 ; 176) s'étendant pour l'essentiel parallèlement au guide d'ondes ;
**caractérisé en ce que**
le noyau en verre (154 ; 174) du guide d'ondes et la zone étrangère (156 ; 176) ont sensiblement la même section transversale du point de vue dimensions et formes.

2. Dispositif de guide d'ondes selon la revendication 1,
**caractérisé en ce que** la zone étrangère (156 ; 176) est un matériau ayant un coefficient thermo-optique dont la valeur est nettement supérieure à la valeur du coefficient thermo-optique du verre et qui, du point de vue valeur, est nettement supérieur au coefficient thermo-optique du verre, notamment plus de quatre vingt fois supérieur.

3. Dispositif de guide d'ondes selon l'une quelconque des revendications précédentes,
**caractérisé en ce que** la zone étrangère (156 ; 176) contient un polymère de fluoroacrylate ou un polymère à base de benzocyclobutène.

4. Dispositif de guide d'ondes selon l'une quelconque des revendications précédentes,
**caractérisé en ce que** la zone étrangère (156 ; 176) s'étend de la surface de la zone (152 ; 172) de guide d'ondes opposée au substrat jusqu'à proximité du guide d'ondes comportant le noyau en verre (154 ; 174).

5. Dispositif de guide d'ondes selon l'une quelconque des revendications précédentes,
**caractérisé en ce que** l'indice de réfraction (n3) du noyau (154 ; 174) du guide d'ondes est supérieur à l'indice de réfraction (n1) de l'enveloppe en verre du guide d'ondes,
et **en ce qu'**en fonction de la température engendrée par l'unité de régulation de température (160 ; 180), l'indice de réfraction (n2) du matériau de la zone étrangère (156 ; 176) est inférieur, égal ou supérieur à l'indice de réfraction (n1) de l'enveloppe en verre du guide d'ondes.

6. Dispositif de guide d'ondes selon l'une quelconque des revendications précédentes,
**caractérisé en ce qu'**une couche intermédiaire (158) est disposée entre l'unité de régulation de température (160) et la zone étrangère (156), laquelle est en un matériau qui empêche qu'une onde se propageant dans la zone étrangère (166) arrive à l'unité de régulation de température (160).

7. Dispositif de guide d'ondes selon l'une quelconque des revendications précédentes,
**caractérisé en ce qu'**une couche intermédiaire (178) est disposée entre l'unité de régulation de température (180) et la zone étrangère (176), laquelle est en un matériau ayant le même indice de réfraction que la zone étrangère (176), et **en ce que** l'unité de régulation de température (180) est disposée sur la couche intermédiaire (178) directement au-dessus de la zone étrangère (176), de sorte qu'une onde se propageant dans la zone étrangère puisse être absorbée dans l'unité de régulation de température (180).
